# EUROPÄISCHE PATENTSCHRIFT

(11) **EP 1 340 726 B1**
(45) Veröffentlichungstag und Bekanntmachung des Hinweises auf die Patenterteilung: **28.12.2005**
(21) Anmeldenummer: 02004523.3
(22) Anmeldetag: 27.02.2002
(51) Int. Cl.: C03C 17/00, C03C 8/14, C03C 8/16

(54) **Verfahren und Vorrichtung zur Beschichtung der Mündungsoberfläche von offenen Glasgefässen**
Method and apparatus for coating the brim of glass vessels
Procédé et dispositif de revêtement d'embouchure de récipients en verre

(43) Veröffentlichungstag der Anmeldung: 03.09.2003
(73) Patentinhaber: Heinz-Glas GmbH, 96355 Tettau-Kleintettau (DE)
(72) Erfinder: Rebhan, Helmut, 96317 Kronach (DE)
(74) Vertreter: Zipse + Habersack

(56) Entgegenhaltungen:
- EP-A- 0 385 589
- US-A- 2 682 480
- US-A- 3 438 793
- US-A- 6 010 973
- PATENT ABSTRACTS OF JAPAN vol. 1996, no. 11, 29. November 1996 (1996-11-29) & JP 08 175829 A (NIPPON ELECTRIC GLASS CO LTD), 9. Juli 1996 (1996-07-09)

## Beschreibung

Die Erfindung betrifft ein Verfahren zur Beschichtung der Mündungsoberflächen von offenen Glasgefäßen nach Anspruch 1, eine Vorrichtung zur Beschichtung der Mündungsoberflächen von offenen Glasgefäßen nach Anspruch 7, sowie eine Verwendung eines Beschichtungsmittels nach Anspruch 12.

Glasgefäße, zum Beispiel aus Opalglas, Kalk-Natron-Glas oder Borosilikatglas, als Verpackungsmaterial weisen, insbesondere in der Kosmetikindustrie, zusätzlich zu einer wiederverschließbaren Abdeckung häufig eine Siegelfolie auf, die den Inhalt des Glasgefäßes gegen die Umgebung abdichtet. Im Gegensatz zur erstgenannten Abdeckung, welche z.B. ein Schraubdeckel oder eine Kappe sein kann, ist die Siegelfolie nicht wiederverschließbar. Eine solche Siegelfolie dient daher, neben dem Schutz des Inhaltes, auch als Originalitätsverschluss, um sicherstellen zu können, dass der Inhalt des Glasgefäßes nach der Abfüllung beim Hersteller nicht verändert wurde. Ein unbeabsichtigtes Lösen der Siegelfolie hat aus den oben genannten Gründen daher zur Folge, dass das verpackte Produkt unverkäuflich wird und dem Abfüller somit erhebliche Schäden entstehen können.

Die Siegelfolie besteht in der Regel aus zwei Schichten: einer Kunststoffschicht und einer Aluminiumschicht. Beim Versiegeln der Glasgefäße mit der Siegelfolie wird diese mittels eines heißen Stempels auf die Mündungsoberfläche der Glasgefäße gepresst. Durch die Einwirkung von Druck und Hitze bildet sich eine haftende Verbindung zwischen der Siegelfolie und der Mündungsoberfläche der Glasgefäße. Diese Verbindung haftet auf Gefäßen aus Klarglas im allgemeinen sehr gut, beim Versiegeln von Gefäßen aus milchigweiß eingefärbtem Glas, zum Beispiel Opalglas, treten jedoch Probleme auf. Opalglas wird im Produktionsprozess mittels Zugabe von Fluor in die Glasschmelze eingefärbt. Fluorbestandteile und Salze treten im Laufe der Zeit aus dem Glas aus, das Glas "altert" sozusagen. Dieser Alterungsprozess verhindert eine zuverlässige Haftung der Siegelfolie auf der Mündungsoberfläche des Gefäßes aus Opalglas, so dass sich die Folie vorzeitig selbsttätig lösen kann. Um dieses Lösen zu verhindern werden die Mündungsoberflächen beschichtet, so dass der schädigende Einfluss der aus dem Opalglas austretenden Bestandteile reduziert, beziehungsweise aufgehoben wird.

Bei einer bekannten Methode wird die Mündungsoberfläche des Glasgefäßes mit einer wässrigen Lösung von Chrom(III) bestrichen, um somit die Verbindung zwischen Siegelfolie und Glasgefäß zu sichern. Da die Lösung farblos ist, ist die Kontrolle des Beschichtungsauftrags schwierig. Zum einen können somit Lücken in der Beschichtung übersehen werden, welche die Haftung der Siegelfolie beeinträchtigen, zum anderen können Anteile der Lösung unbemerkt in das Glasgefäß selbst gelangen und dort zu schwärzlichen Verfärbungen führen. Ein weiterer Nachteil besteht darin, dass Chrom(III) durch die Hitzezuführung beim Aufpressen der Siegelfolie auf die beschichtete Mündungsoberfläche in Chrom(IV) umgewandelt werden kann, dessen Verbindungen, insbesondere Chrom(IV)-oxid, toxisch sind.

Eine weitere Beschichtungsmöglichkeit besteht darin, die Mündungsoberfläche der Glasgefäße mit einer keramischen Farbe zu bestreichen. Bei dieser Lösung ergibt sich jedoch das Problem, dass die Haltbarkeit der Verbindung und die Abzugskräfte zum Lösen der Siegelfolie unterschiedlich sind, je nachdem, ob die Wärmezufuhr beim Versiegeln induktiv oder konduktiv erfolgt ist. Da dieselben Produkte häufig auf verschiedenen Maschinen, mit verschiedenen Verfahren zur Wärmezufuhr, abgefüllt werden, ist diese Lösung für viele Anwendungsfälle nur bedingt geeignet.

Es ist daher Ziel der vorliegenden Erfindung ein Verfahren und eine Vorrichtung, sowie ein Beschichtungsmittel zu schaffen, dass die oben genannten Nachteile des Standes der Technik beseitigt und eine sicher Haftung von Siegelfolien auf der Mündungsoberfläche von Glasgefäßen, insbesondere Glasgefäßen aus Opalglas, gewährleistet.

Erfindungsgemäß besteht die Vorrichtung aus einem umlaufenden Band, einer Dosiereinrichtung zum Aufbringen der Mischung auf das Band und Mittel zum Anpressen des Bandes mit der Beschichtung auf die Mündungsoberfläche der Glasgefäße. Die Dosiereinrichtung ist mit Mitteln zum Aufheizen und Verflüssigen des Beschichtungsmittels versehen, welches bei Raumtemperatur fest ist. Die Heizeinrichtung der Dosiereinrichtung erwärmt das Beschichtungsmittel auf die bevorzugte Verarbeitungstemperatur von 80-120° Celsius, in welchem Temperaturbereich das Beschichtungsmittel die Konsistenz von heißem Wachs und den damit verbundenen Hafteigenschaften aufweist. Das wachsartige und heiße Beschichtungsmittel wird mittels einer geeigneten Verteileinrichtung, z.B. einer Düse, auf das Band aufgetragen. Die Verteileinrichtung ist vorzugsweise mit Mitteln zur Einstellung der Fördermenge des Beschichtungsmittels versehen. Das wachsartige, heiße Beschichtungsmittel haftet auf dem Band, so dass die beschichtete Seite des Bandes auch in Richtung Boden zeigen kann, ohne dass sich das Beschichtungsmittel vom Band ablöst. Das beschichtete Band wird mit Anpressmitteln, z.B. Andruckrollen, auf die Mündungsoberfläche der zu beschichtenden Glasgefäße gepresst, wodurch diese mit dem Beschichtungsmittel beschichtet werden.

In einer bevorzugten Ausführungsform ist die Vorrichtung mit Mitteln zum Abstreifen von überschüssigem Beschichtungsmittel und mit Einrichtungen zur Rückführung des so entnommenen Beschichtungsmittels versehen. Es ist somit möglich, dass abgeführte, überschüssige Beschichtungsmittel der Dosiereinrichtung zur weiteren Verwendung zuzuführen. In einer weiteren bevorzugten Ausführungsform besteht das Band aus einem engmaschigen Metallgewebe, vorzugsweise aus Edelstahl, welches nahtlos, z.B. mittels Plasmaschweißung, gefertigt ist. Um zu verhindern, dass Beschichtungsmittel durch die engen Maschen des Metallgewebes gelangt und um eine unlösbare Haftung des Beschichtungsmittels mit dem Band zu verhindern, ist das Metallgewebe mit Teflon beschichtet. Das Metallband ist hitzebeständig und kann zur Beschichtung von heißen Glasgefäßen genutzt werden, z.B. zur Beschichtung von Glasgefäßen, die sich auf dem Weg zwischen Formgebungsprozess und Abkühlofen befinden und eine Temperatur von ca. 500-600° Celsius aufweisen. Aufgrund der Teflonbeschichtung lässt sich das Beschichtungsmittel beim Beschichten der Glasgefäße und auch beim Abstreichen zur Rückführung von überschüssigem Beschichtungsmittel einfach vom Band lösen.

In einer weiteren bevorzugten Ausführungsform ist die Vorrichtung mit Heiz- und Kühlvorrichtungen zum Heizen und Kühlen des Bandes, sowie mit Mitteln zur Temperaturmessung der Bandoberfläche versehen. Mit Hilfe dieser Einrichtungen kann das Band bzw. die damit transportierte Beschichtung im bevorzugten Temperaturbereich von 80-120° Celsius gehalten werden. Die Temperaturregelung erfolgt bevorzugt über eine automatische Regeleinrichtung.

Das Verfahren gemäß der Erfindung zeichnet sich dadurch aus, dass die Beschichtung der Mündungsoberfläche der Glasgefäße zwischen dem Formgebungsprozess und dem Entspannen der Glasgefäße im Abkühlofen erfolgt. Der Abkühlofen dient bei der Glasherstellung zum Beseitigen von inneren Spannungen im Glas, die durch die Formgebung entstehen, nachdem das geschmolzene Glas in den Formen erstarrt ist. Zum Zeitpunkt der Beschichtung hat das Glas daher noch eine Temperatur von ca. 500-600° Celsius. Ein Vorteil dieses Verfahrens liegt darin, dass der Beschichtungsvorgang während des Produktionsprozesses stattfindet und die Glasgefäße zur Beschichtung nicht aus dem Produktionsablauf ausgeschleust werden müssen oder aber erst in einem zweiten Schritt, nach Abkühlung, beschichtet werden müssen. Die Glasgefäße werden also auf der Transporteinrichtung, die sie von der Formgebung zum Abkühlofen transportiert, beschichtet. Die Beschichtung erfolgt mittels eines umlaufenden Bandes, welches das Beschichtungsmittel trägt und auf die Mündungsoberfläche der Glasgefäße aufbringt. Die Glasgefäße werden mittels der Transporteinrichtung, die sie von der Formgebung zum Abkühlofen transportiert, unter das gleichsinnig laufende mit Beschichtungsmittel versehene Band geführt. Die Bandgeschwindigkeit entspricht dabei der Geschwindigkeit der Transporteinrichtung, so dass relativ zwischen Glasgefäß und Bandoberfläche keine Bewegung stattfindet. Die Mündungsoberfläche wird also nicht mit dem Beschichtungsmittel bestrichen, wie es z.B. der Fall wäre, wenn Band und Glasgefäß verschiedene Geschwindigkeiten hätten, oder man eine Walze oder einen Pinsel verwenden würde, so dass die Gefahr, dass Beschichtungsmittel unbeabsichtigt in das Innere des Gefäßes gelangt verringert wird. Das mit Beschichtungsmittel versehene Band wird im Verfahren gemäß der Erfindung vielmehr mittels Andruckmitteln auf die heiße Mündungsoberfläche der Glasgefäße gepresst. Die so beschichteten Glasgefäße werden danach in den Abkühlofen transportiert, in dem sie kurz wieder erhitzt und anschließend kontrolliert abgekühlt werden. Dabei erfolgt auch ein Aushärten des Beschichtungsmittels, so dass dieses nach dem Abkühlprozess fest mit dem Glasgefäß verbunden ist.

In einer bevorzugten Ausführungsform des Verfahrens besteht das Beschichtungsmittel aus wenigstens einer thermoplastischen Trägersubstanz und mindestens zwei verschiedenen, pulverförmigen Substanzen mit unterschiedlichen Schmelzpunkten. Mindestens eine der Substanzen basiert auf Keramik und mindestens eine auf Glas als Grundstoff. Als Mischungsverhältnis hat es sich als vorteilhaft erwiesen je 100 Teile der pulverförmigen Substanzen mit 40 Teilen der Trägersubstanzen zu vermischen, wobei die pulverförmigen Substanzen zu 85% aus dem glasartigen und zu 15% aus dem keramischen Grundstoff bestehen. Da die thermoplastische Trägersubstanz bei Raumtemperatur fest ist, muss das Beschichtungsmittel vor der Verarbeitung erhitzt werden. Bei einer Temperatur von 80 bis 120° Celsius, zur Verarbeitung werden jedoch 100° Celsius bevorzugt, hat das Beschichtungsmittel eine wachsartige Konsistenz und wird mittels Dosiereinrichtungen auf das umlaufende Band aufgetragen. Die Temperatur des auf dem Band befindlichen Beschichtungsmittels wird mittels Temperatursensoren überwacht und durch Kühlen oder Erwärmen des Bandes mit dafür vorgesehenen Kühl- und Heizeinrichtungen im Temperaturbereich von 80 bis 120° Celsius gehalten. Die Kühleinrichtungen verhindern, dass das Band durch die Berührung mit den heißen Mündungsoberflächen der Glasgefäße zu heiß wird und das Beschichtungsmittel am Band festbrennt. Die unterschiedlichen Schmelzpunkte der pulverförmigen Bestandteile sind vorzugsweise so gewählt, dass der niedrigste Schmelzpunkt im Bereich der Temperatur der Mündungsoberflächen der Glasgefäße liegt und die anderen Schmelzpunkte deutlich darüber liegen. Beispielsweise könnte eine der Substanzen auf keramischer Basis mit einem Schmelzpunkt von ca. 800° Celsius und eine der Substanzen auf Glasbasis mit einem Schmelzpunkt von ca. 500° Celsius gewählt werden. Beim Auftragen der Beschichtungsmischung auf die heiße Mündungsoberfläche schmilzt die Substanz mit dem niedrigen Schmelzpunkt zumindest teilweise und sorgt so, zusammen mit der Trägersubstanz, für eine dauerhafte und lückenlose Beschichtung der Mündungsoberfläche. Die Substanz mit dem höheren Schmelzpunkt wird von der geschmolzenen Substanz und der Trägersubstanz eingebunden und sorgt, da ihre Bestandteile nicht geschmolzen sind, für eine raue Oberfläche der Beschichtung. Im Vergleich zu den üblicherweise glatten Oberflächen der Glasgefäße ist die Oberfläche von Beschichtungen gemäß der Erfindung durch ihre raue Struktur vergrößert und verbessert somit die Hafteigenschaften der Siegelfolie auf der beschichteten Mündungsoberfläche der Glasgefäße. Die lückenlose Beschichtung durch die Trägersubstanz und die geschmolzene Substanz dienen als Isolationsschicht gegen aus dem Glas austretende Substanzen, insbesondere Fluor, und verhindert somit wirksam den schädlichen Einfluss der Alterung des Glases auf die Haftungseigenschaften der Siegelfolie. Ein weiterer Vorteil der Beschichtung gemäß der Erfindung liegt darin, dass sich die Beschichtung farblich sowie strukturell von der Oberfläche der zu beschichtenden Glasgefäße abhebt. Dies ermöglicht eine kontinuierliche Kontrolle der Beschichtungsgüte mittels optischer Messverfahren.

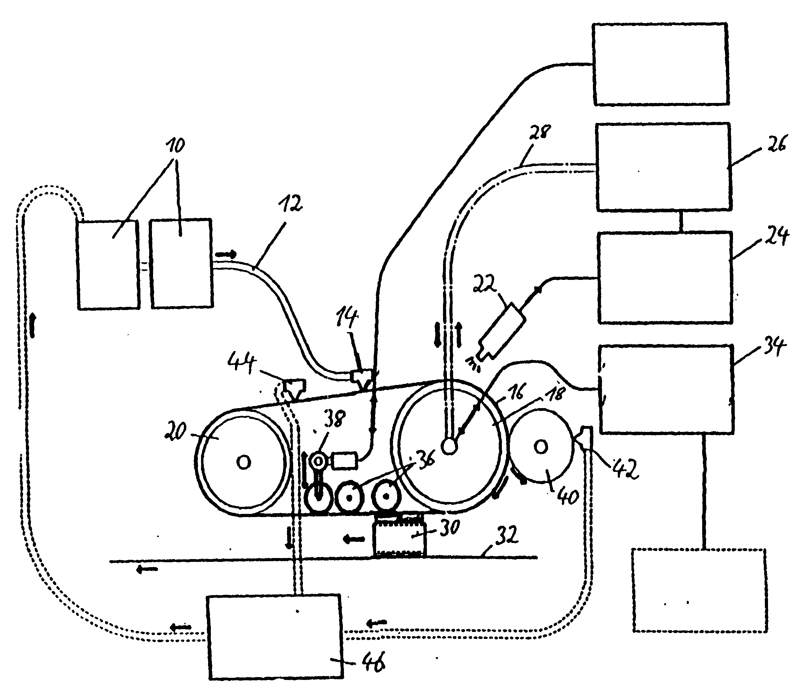

Die Erfindung wird im folgenden anhand der beigefügten Zeichnung ausführlich beschrieben, welche schematisch ein Ausführungsbeispiel einer Vorrichtung zur Beschichtung der Mündungsoberfläche von offenen Glasgefäßen zeigt.

Die bei Raumtemperatur feste Beschichtungsmischung wird in einer Dosiereinrichtung 10 auf 80 bis 120° Celsius erhitzt und damit verflüssigt, so dass sie die zur Verarbeitung nötige Konsistenz von flüssigem Wachs aufweist. Die verflüssigte Beschichtungsmischung wird über eine Zufuhrleitung 12 einem beheizten Düsenkopf 14 zugeführt. Die Zufuhrleitung 12 besteht aus einem beheizten und mit einer Temperaturregelung versehenen Teflonschlauch. Der Düsenkopf 14 verteilt die Beschichtungsmischung auf ein Band 16, welches aus einem nahtlosen Metallgewebe besteht und mit Teflon beschichtet ist. Die Teflonbeschichtung des Bandes ist lückenlos, so dass die Beschichtungsmischung nicht durch die Löcher im Metallgewebe dringen kann. Das Band 16 wird mittels einer Antriebsrolle 18 und einer Führungsrolle 20 angetrieben bzw. geführt. Die Lauffläche der Führungsrolle 20 ist bevorzugt konvex ausgebildet. Die Antriebsrolle 18 ist mit Mitteln, z.B. Leitungen für ein wärmeübertragendes Medium, zur Kühlung und Beheizung des Bandes versehen. Alternativ dazu können die Kühl- und Heizmittel auch oder zusätzlich in der Führungsrolle 20 oder an einer anderen geeigneten Stelle der Vorrichtung angebracht sein. Zur Regelung der Temperatur ist die Vorrichtung mit einem optischen Temperaturfühler 22 versehen, der seine Signale an eine Regeleinrichtung 24 für einen Kühl- und Heizapparat 26 leitet. Der Kühl- und Heizapparat 26 erwärmt bzw. kühlt ein wärmeübertragendes Medium, welches über Leitungen 28 zwischen der Antriebsrolle und dem Apparat zirkuliert. Alternativ dazu kann der Apparat zur Kühlung und Heizung auch direkt in der Antriebs- und oder Führungsrolle angebracht sein.

Die zu beschichtenden Glasgefäße 30 laufen auf dem Maschinenband 32 der Produktionsanlage in derselben Geschwindigkeit und gleichsinnig mit dem Band 16. Um die Bandgeschwindigkeit der Vorrichtung an die Geschwindigkeit des Maschinenbandes 32 anzupassen, verfügt die Vorrichtung über eine Geschwindigkeitsregeleinrichtung 34 für die Antriebsrolle 18, deren Eingangsgröße die Geschwindigkeit des Maschinenbandes 32 ist. Das mit Beschichtungsmittel versehene Band 16 wird mittels Andruckrollen 36 auf die Mündungsoberfläche der Glasgefäße 30 gepresst. Über einen Mechanismus 38 kann die horizontale Lage des Bandes justiert werden.

Die Antriebsrolle wird an ihrem Umfang von einer Metallrolle 40 zur Beschichtungsmittelverteilung und Beschichtungsmittelaufnahme bei Unterbrechungen des Produktionsprozesses berührt. Das Band sowie die Metallrolle 40 verfügen über Abstreifeinrichtungen 42, 44 die überschüssiges Beschichtungsmittel von Band und Metallrolle abstreifen und einem weiteren Schmelzbehälter 46 zuführen, welcher beheizt ist, so dass sich das Beschichtungsmittel nicht verfestigt. Vom Schmelzbehälter 46 wird das Beschichtungsmittel wieder zurück in die Dosiereinrichtung 10 befördert.

## Patentansprüche

1. Verfahren zur Beschichtung der Mündungsoberfläche von offenen Glasgefäßen, insbesondere Opalglasgefäßen, mit einer Mischung aus gemahlenem Glas und Trägersubstanzen, welche als Haftunterlage für Siegelfolien zum Verschließen der Glasgefäßöffnungen dient,
**dadurch gekennzeichnet,**
**dass** der Beschichtungsvorgang in den Produktionsprozess der Glasgefäße integriert ist und die Beschichtung zwischen dem Formgebungsprozess und dem Entspannen der Glasgefäße im Abkühlofen auf die heiße Mündungsoberfläche erfolgt.

2. Verfahren nach Anspruch 1,
**dadurch gekennzeichnet,**
**dass** der Auftrag der Beschichtung der Glasgefäße im Durchlauf erfolgt.

3. Verfahren nach Anspruch 1 oder 2,
**dadurch gekennzeichnet,**
**dass** das Beschichtungsmittel eine thermoplastische Trägersubstanz und wenigstens zwei verschiedene, pulverförmige Substanzen mit unterschiedlichen Schmelzpunkten aufweist, von denen mindestens eines auf Keramik und mindestens eine auf Glas als Grundstoff basiert.

4. Verfahren nach Anspruch 3,
**dadurch gekennzeichnet,**
**dass** eine der pulverförmigen Substanzen des Beschichtungsmittels einen Schmelzpunkt nahe der Temperatur der heißen Mündungsoberfläche besitzt und eine andere Substanz einen wesentlich höheren Schmelzpunkt aufweist.

5. Verfahren nach einem der Ansprüche 1 bis 4,
**dadurch gekennzeichnet,**
**dass** das Beschichtungsmittel beim Auftragen auf die Mündungsoberfläche des Glasgefäßes eine Temperatur von 80 bis 120° Celsius aufweist.

6. Verfahren nach einem der Ansprüche 1 bis 5,
**dadurch gekennzeichnet,**
**dass** die Güte der Beschichtung mittels optischer Messverfahren während des Produktionsprozesses kontrolliert wird.

7. Vorrichtung zur Beschichtung der Mündungsoberfläche von offenen Glasgefäßen, insbesondere Opalglasgefäßen, mit einer Mischung aus gemahlenem Glas und Trägersubstanzen, welche als Haftunterlage für Siegelfolien zum Verschließen der Glasgefäßöffnungen dient,
**gekennzeichnet durch**
ein umlaufendes Beschichtungsband (16), eine Dosiereinrichtung (10) zum Aufbringen der Mischung auf das Band und Mittel zum Anpressen des Bandes mit der Beschichtung auf die heißen Mündungsoberflächen der Glasgefäße (30).

8. Vorrichtung nach Anspruch 7,
**dadurch gekennzeichnet,**
**dass** das Band (16) mit einer Geschwindigkeit, entsprechend der Fördergeschwindigkeit der Glassgefäße (30) angetrieben ist.

9. Vorrichtung nach Anspruch 7 oder 8,
**dadurch gekennzeichnet,**
**dass** das Band (16) aus einem nahtlos geschweißten, teflonbeschichteten Metallgewebe besteht.

10. Vorrichtung nach einem der Ansprüche 7 bis 9,
**dadurch gekennzeichnet,**
**dass** die Vorrichtung mit Messgeräten (22) zur Bestimmung der Temperatur der auf dem Band befindlichen Mischung und mit Mitteln (26) zum Erwärmen und Kühlen des Bandes ausgestattet ist.

11. Vorrichtung nach einem der Ansprüche 7 bis 10,
**dadurch gekennzeichnet,**
**dass** die Vorrichtung über Abstreif- und Rückführsysteme (42, 44, 46) zur Aufnahme und Rückführung von überschüssigem Beschichtungsmittel vom Band verfügt.

12. Verwendung eines Beschichtungsmittels, das aus wenigstens zwei verschiedenen, pulverförmigen Substanzen und einer thermoplastischen Trägersubstanz besteht zur Beschichtung der Mündungsoberfläche von offenen Glasgefäßen, insbesondere Opalglasgefäßen.

13. Verwendung eines Beschichtungsmittel nach Anspruch 12,
**dadurch gekennzeichnet,**
**dass** die wenigstens zwei verschiedenen, pulverförmigen Substanzen unterschiedliche Schmelzpunkte aufweisen und mindestens eine der pulverförmigen Substanzen auf Keramik und mindestens eine auf Glas als Grundstoff basiert.

14. Verwendung eines Beschichtungsmittel nach Anspruch 12 oder 13,
**dadurch gekennzeichnet,**
**dass** eine der pulverförmigen Substanzen des Beschichtungsmittels einen Schmelzpunkt nahe der Temperatur der heißen Mündungsoberfläche besitzt und eine andere Substanz einen wesentlich höheren Schmelzpunkt aufweist.

15. Verwendung eines Beschichtungsmittel nach einem der Ansprüche 12 bis 14,
**dadurch gekennzeichnet,**
**dass** die thermoplastische Trägersubstanz bei Raumtemperatur fest ist und eine Verarbeitungstemperatur von 80-120° Celsius besitzt.

## Claims

1. A method for coating the brim of open glass receptacles, particularly opal glass receptacles, with a mixture of ground glass and vehicle substances serving as the adhesive base for sealing films for closing off the openings of the glass receptacles, **characterized in that** the coating procedure is integrated in the process for producing the glass receptacles and the coating is applied to the hot brim between the shaping process and annealing of the glass receptacles in the annealing oven.

2. The method as set forth in claim 1, **characterized in that** applying the coating to the glass receptacles is done on the fly.

3. The method as set forth in claim 1 or 2, **characterized in that** the coating comprises a thermoplastic vehicle substance and at least two different powdered substances having different melting points, of which at least one is ceramic-based and at least one is glass-based.

4. The method as set forth in claim 3, **characterized in that** one of the powdered substances of the coating has a melting point near to the temperature of the hot brim and another substance has a substantially higher melting point.

5. The method as set forth in any of the claims 1 to 4, **characterized in that** the coating has a temperature in the range 80 to 120° when being applied to the brim of the glass receptacle.

6. The method as set forth in any of the claims 1 to 5, **characterized in that** the quality of the coating is controlled by optical sensing during the production process.

7. An apparatus for coating the brim of open glass receptacles, particularly opal glass receptacles, with a mixture of ground glass and vehicle substances serving as the adhesive base for sealing films for closing off the openings of the glass receptacles, comprising a circumferential coating belt (16), a metering means (10) for applying the mix to the belt and means for pressing the belt with the coating onto the hot brims of the glass receptacles (30).

8. The apparatus as set forth in claim 7, **characterized in that** the belt (16) is driven at a speed corresponding to the speed at which the glass receptacles (30) are conveyed.

9. The apparatus as set forth in claim 7 or 8, **characterized in that** the belt (16) is made of a seamless welded, teflon-coated metal fabric.

10. The apparatus as set forth in any of the claims 7 to 9, **characterized in that** the apparatus is equipped with sensors (22) for determining the temperature of the mix on the band and with means (26) for heating and cooling the belt.

11. The apparatus as set forth in any of the claims 7 to 10, **characterized in that** the apparatus is provided with sweeper/return systems (42, 44, 46) for sweeping off and returning excess coating from the belt.

12. Use of a coating comprising at least two different powdered substances and a thermoplastic vehicle substance for coating the brim of open glass receptacles, particularly of opal glass receptacles.

13. Use of a coating as set forth in claim 12, **characterized in that** the at least two different powdered substances have different melting points, of which at least one is ceramic-based and at least one glass-based.

14. Use of a coating as set forth in claim 12 or 13, **characterized in that** one of the powdered substances of the coating has a melting point near to the temperature of the hot brim and another substance has a substantially higher melting point.

15. Use of a coating as set forth in claim 12 to 14, **characterized in that** the thermoplastic vehicle substance is solid at room temperature and has a processing temperature in the range 80 to 120°.

## Revendications

1. Procédé de revêtement d'embouchure de récipients en verre, notamment de récipients en opaline, avec un mélange de verre pulvérisé et de substances porteuses servant de support adhésif pour feuilles de scellement destinées à obturer les embouchures de récipients en verre,
**caractérisé par le fait que** le procédé de revêtement est intégré dans le processus de fabrication des récipients en verre et que le revêtement s'effectuer sur l'embouchure chaude pendant la phase entre le processus de façonnage et la relaxation des récipients en verre dans le fourneau de recuisson.

2. Procédé selon la revendication 1,
**caractérisé par le fait que** l'application du revêtement des récipients en verre s'effectue en continu.

3. Procédé selon la revendication 1 ou 2,
**caractérisé par le fait que** le moyen de revêtement comporte une substance porteuse thermoplastique et au moins deux substances pulvérisées distinctes présentant des points de fusion différents dont au moins une est basée sur la céramique et au moins une sur le verre en tant que matière de base.

4. Procédé selon la revendication 3,
**caractérisé par le fait que** l'une des substances pulvérisées du moyen de revêtement présente un point de fusion proche de la température de l'embouchure chaude et l'autre substance un point de fusion considérablement plus élevé.

5. Procédé selon l'une quelconque des revendications 1 à 4,
**caractérisé par le fait qu'**à l'application sur l'embouchure du récipient en verre, le moyen de revêtement présente une température comprise entre 80 et 120° Celsius.

6. Procédé selon l'une quelconque des revendications 1 à 5,
**caractérisé par le fait que** pendant le processus du fabrication, la qualité du revêtement est contrôlée au moyen de procédés de mesure optiques.

7. Dispositif de revêtement d'embouchure de récipients en verre, notamment de récipients en opaline, avec un mélange de verre pulvérisé et de substances porteuses servant de support adhésif pour feuilles de scellement destinées à obturer les embouchures de récipients en verre,
**caractérisé par** une bande de revêtement périphérique (16), un dispositif de dosage (10) destiné à appliquer le mélange sur la bande et des moyens des tinés à comprimer la bande contenant le revêtement contre les embouchures chaudes de récipients en verre (30).

8. Dispositif selon la revendication 7,
**caractérisé par le fait que** la bande (16) est entraînée à une vitesse correspondant à la vitesse de transport des récipients en verre (30).

9. Dispositif selon la revendication 7 ou 8,
**caractérisé par le fait que** la bande (16) est constituée d'un tissu métallique revêtu de Téflon et soudé sans raccord.

10. Dispositif selon l'une quelconque des revendications 7 à 9,
**caractérisé par le fait que** le dispositif est équipé d'appareils de mesure (22) destinés à définir la température du mélange porté par la bande et de moyens (26) prévus pour l'échauffement et le refroidissement de la bande.

11. Dispositif selon l'une quelconque des revendications 7 à 10,
**caractérisé par le fait que** le dispositif est équipé de systèmes de raclage et de reconduite (42, 44, 46) destinés à recevoir et reconduire le moyen de revêtement dans la bande.

12. Utilisation d'un moyen de revêtement composé d'au moins deux substances pulvérisées différentes et d'une substance porteuse thermoplastique pour le revêtement de l'embouchure de récipients en verre, notamment de récipients en opaline.

13. Utilisation d'un moyen de revêtement selon la revendication 12,
**caractérisée par le fait qu'**au moins deux substances pulvérisées distinctes présentant un point de fusion différent et qu'au moins une des substances pulvérisées est basée sur la céramique et au moins une sur le verre en tant que matière de base.

14. Utilisation d'un moyen de revêtement selon la revendication 12 ou 13,
**caractérisée par le fait que** l'une des substances pulvérisées du moyen de revêtement présente un point de fusion proche de la température de l'embouchure chaude et l'autre substance un point de fusion considérablement plus élevé.

15. Utilisation d'un moyen de revêtement selon l'une des revendications 12 à 14,
**caractérisée par le fait qu'**à température ambiante, la substance porteuse thermoplastique est solide et sa température de transformation est comprise entre 80 et 120° Celsius.
